# EUROPEAN PATENT SPECIFICATION

(11) **EP 2 187 009 B1**
(45) Date of publication and mention of the grant of the patent: **01.02.2012**
(21) Application number: 09171096.2
(22) Date of filing: 23.09.2009
(51) Int. Cl.: F01N 3/20, F01N 9/00

(54) **Method for operating an exhaust gas treatment system**
Betriebsverfahren für ein Abgasbehandlungssystem
Procédé de fonctionnement d'un système de traitement des gaz d'échappement

(30) Priority: 24.10.2008 US 108172 P; 04.12.2008 US 327958
(43) Date of publication of application: 19.05.2010
(60) Divisional application: 11151492.3
(73) Proprietor: Delphi Technologies, Inc., Troy, MI 48007 (US)
(72) Inventor: Wu, Ming-Cheng, Troy, MI 48098 (US); Herman, Andrew D., Grand Blanc, MI 48439 (US); Shost, Mark A., Northville, MI 48168-4437 (US)
(74) Representative: Denton, Michael John

(56) References cited:
- US-A1- 2006 000 202
- US-A1- 2006 130 461
- US-A1- 2007 125 071
- US-B1- 6 427 439

## Description

### TECHNICAL FIELD

The present invention relates generally to an exhaust gas treatment system for use with an internal combustion engine where the exhaust treatment system is of the type using a selective catalytic reduction (SCR) catalyst and methods for operating the same.

### BACKGROUND OF THE INVENTION

The relevant background includes the fields of exhaust gas treatment systems and diagnostics therefore. As to the former field of endeavor, there have been a variety of exhaust gas treatment systems developed in the art to minimize emission of undesirable constituent components of engine exhaust gas. It is known to reduce NOx emissions using a SCR catalyst, treatment device that includes a catalyst and a system that is operable to inject material such as ammonia (NH₃) into the exhaust gas feedstream ahead of the catalyst. The SCR catalyst is constructed so as to promote the reduction of NOx by NH₃ (or other reductant, such as aqueous urea which undergoes decomposition in the exhaust to produce NH₃). NH₃ or urea selectively combine with NOx to form N₂ and H₂O in the presence of the SCR catalyst, as described generally in U.S. Patent Publication 2007/0271908 entitled "ENGINE EXHAUST EMISSION CONTROL SYSTEM PROVIDING ON-BOARD AMMONIA GENERATION". For diesel engines, for example, selective catalytic reduction (SCR) of NOx with ammonia is perhaps the most selective and active reaction for the removal of NOx in the presence of excess oxygen. The NH₃ source must be periodically replenished and the injection of NH₃ into the SCR catalyst requires precise control. Overinjection may cause a release of NH₃ ("slip") out of the tailpipe into the atmosphere, while underinjection may result in inadequate emissions reduction (*i.e*., inadequate NOx conversion to N₂ and H₂O).

These systems have been amply demonstrated in the stationary catalytic applications. For mobile applications where it is generally not possible (or at least not desirable) to use ammonia directly, urea-water solutions have been proven to be suitable sources of ammonia in the exhaust gas stream. This has made SCR possible for a wide range of vehicle applications.

Increasingly stringent demands for low tail pipe emissions of NOx have been placed on heavy duty diesel powered vehicles. Liquid urea dosing systems with selective catalytic NOx reduction (SCR) technologies have been developed in the art that provide potentially viable solutions for meeting current and future diesel NOx emission standards around the world. Ammonia emissions may also be set by regulation or simply as a matter of quality. For example, European emission standards (*e.g*., EU 6) for NH₃ slip targets specify 10 ppm average and 30 ppm peak. However, the challenge described above remains, namely, that such treatment systems achieve maximum NOx reduction (*i.e*., at least meeting NOx emissions criteria) while at the same time maintaining acceptable NH₃ emissions, particularly over the service life of the treatment system. In US 2006/0000202, Ripper et al. disclose a method for operating a catalytic converter where reagent needed is introduced in an exhaust duct upstream the converter and where the reagent fill level of the converter is controlled to be at a predetermined setpoint value.

In addition to the substantive emissions standards described above, vehicle-based engine and emission systems typically also require various self-monitoring diagnostics to ensure tailpipe emissions compliance. In this regards, U.S. federal and state on-board diagnostic regulations (*e.g*., OBDII) require that certain emission-related systems on the vehicle be monitored, and that a vehicle operator be notified if the system is not functioning in a predetermined manner. Automotive vehicle electronics therefore typically include a programmed diagnostic data manager or the like service configured to receive reports from diagnostic algorithms/circuits concerning the operational status of various components or systems and to set/reset various standardized diagnostic trouble codes (DTC) and/or otherwise generate an alert (*e.g*., MIL). The intent of such diagnostics is to inform the operator when performance of a component and/or system has degraded to a level where emissions performance may be affected and to provide information (*e.g*., via the DTC) to facilitate remediation. an adequate solution. It would be advantageous to provide diagnostic routines to detect any such degradation.

There is therefore a need for diagnostic methods that minimize or eliminate one or more of the problems set forth above.

### SUMMARY OF THE INVENTION

The invention provides an advantage for exhaust gas treatment systems that use ammonia or other reductant (*e.g*., aqueous urea solution) injection in combination with an SCR catalyst for NOx removal from the engine exhaust gas. More specifically, the invention allows for an increased default dosing rate for normal operation, particularly at lower temperatures (*e.g*., below 300 °C), for maximal NOx conversion under certain driving conditions, without significant risk of high ammonia concentration slips when the temperature increases. This is because the control features of the invention are configured to recognize when possible ammonia slips are likely and reduce the dosing in advance.

In the invention, a method of NH₃ slip control is provided. The slip control feature, in one embodiments, shuts-off dosing when certain exhaust conditions are detected, thereby mitigating an ammonia slip. The method includes a number of steps. The first step involves dosing reductant (*e.g*., NH₃, aqueous urea) into the exhaust gas stream. Next, establishing an ammonia slip trip level based on the exhaust temperature. Finally, decreasing (perhaps significantly), and preferably, discontinuing, the dosing step when an ammonia concentration level, measured at the SCR catalyst (*e.g*., mid-brick position) exceeds the ammonia slip trip level, provided that the exhaust temperature gradient is in an increasing state. The combination of conditions indicate the risk of an unacceptably high NH₃ slip and warrant shutting-off dosing until the conditions subside.

An exhaust gas treatment system is also presented.

### BRIEF DESCRIPTION OF THE DRAWINGS

The present invention will now be described by way of example, with reference to the accompanying drawings:

Figure 1 is a diagrammatic and block diagram showing an exhaust treatment system in which the control methods of the invention may be practiced.

Figure 2 is a block diagram showing an overview of the dosing control that includes an SCR model as well as improved control features.

Figure 3 is a signal flow mechanization schematic showing inputs and outputs of the SCR model.

Figure 4 is a simplified diagram showing typical target theta (θ) values or curves as a function of temperature.

Figure 5 is a flowchart of a method for controlling an exhaust treatment system involving ammonia (NH₃) slip control.

Figure 6 is a timing diagram showing recognition of certain exhaust conditions to activate NH₃ slip control.

Figure 7 is a timing diagram showing NOx removal and exhaust temperature.

Figure 8 is a timing diagram showing the respective outputs of mid-brick positioned and post-SCR catalyst positioned ammonia sensors.

### DESCRIPTION OF THE PREFERRED EMBODIMENT

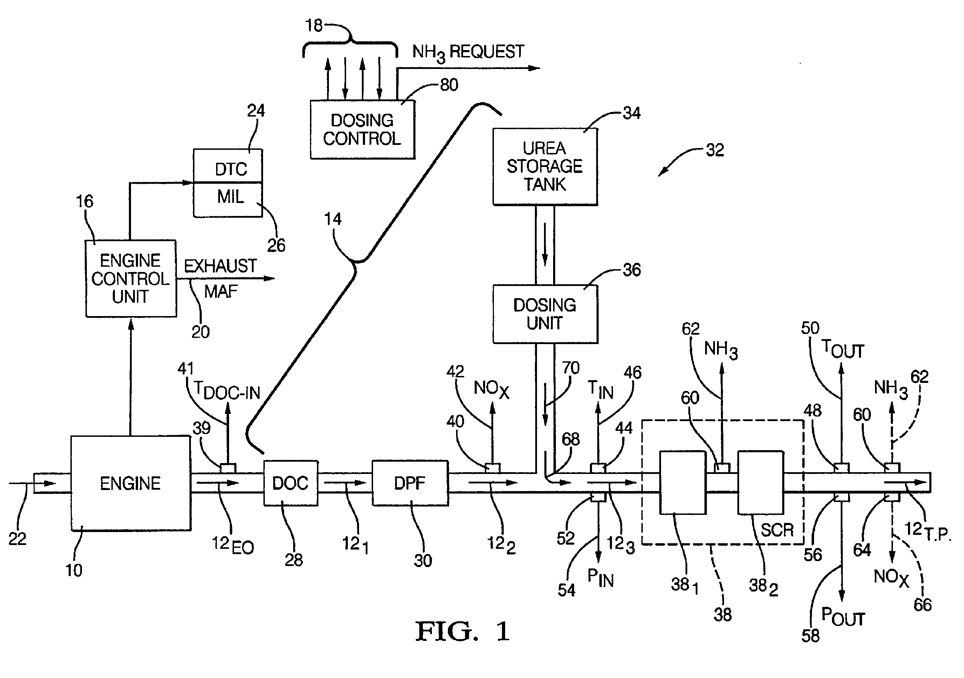

Referring now to the drawings wherein like reference numerals are used to identify identical components in the various views, Figure 1 is a diagrammatic and block diagram showing an exemplary diesel cycle internal combustion engine 10 whose combustion exhaust gas 12 is fed to an exhaust gas treatment system 14. The exhaust gas is represented as a stream flowing through the exhaust gas treatment system 14 and is shown as a series of arrows designated 12_{EO} (engine out), 12₁, 12₂, 12₃ and 12 _{TP} (tail pipe). It should be understood that while the invention will be described in connection with an automotive vehicle (*i.e*., mobile) embodiment, the invention may find useful application in stationary applications as well. In addition, embodiments of the invention may be used in heavy-duty applications (*e.g*., highway tractors, trucks and the like) as well as light-duty applications (*e.g*., passenger cars). Moreover, embodiments of the invention may find further useful application in various types of internal combustion engines, such as compression-ignition (*e.g*., diesel) engines as well as spark-ignition engines.

In the illustrative embodiment, the engine 10 may be a turbocharged diesel engine. In a constructed embodiment, the engine 10 comprised a conventional 6.6-liter, 8-cylinder turbocharged diesel engine commercially available under the DuraMax trade designation. It should be understood this is exemplary only.

Figure 1 also shows an engine control unit (ECU) 16 configured to control the operation of the engine 10. The ECU 16 may comprise conventional apparatus known generally in the art for such purpose. Generally, the ECU 16 may include at least one microprocessor or other processing unit, associated memory devices such as read only memory (ROM) and random access memory (RAM), a timing clock, input devices for monitoring input from external analog and digital devices and controlling output devices. The ECU 16 is operable to monitor engine operating conditions and other inputs (*e.g*., operator inputs) using the plurality of sensors and input mechanisms, and control engine operations with the plurality of output systems and actuators, using pre-established algorithms and calibrations that integrate information from monitored conditions and inputs. It should be understood that many of the conventional sensors employed in an engine system have been omitted for clarity. The ECU 16 may be configured to calculate an exhaust mass air flow (MAF) parameter 20 indicative of the mass air flow exiting engine 10.

The software algorithms and calibrations which are executed in the ECU 16 may generally comprise conventional strategies known to those of ordinary skill in the art. Overall, in response to the various inputs, the ECU 16 develops the necessary outputs to control the throttle valve position, fueling (fuel injector opening, duration and closing), spark (ignition timing) and other aspects, all as known in the art.

In addition to the control of the engine 10, the ECU 16 is also typically configured to perform various diagnostics. For this purpose, the ECU 16 may be configured to include a diagnostic data manager or the like, a higher level service arranged to manage the reports received from various lower level diagnostic routines/circuits, and set or reset diagnostic trouble code(s)/service codes, as well as activate or extinguish various alerts, all as known generally in the art. For example only, such a diagnostic data manager may be pre-configured such that certain non-continuous monitoring diagnostics require that such diagnostic fail twice before a diagnostic trouble code (DTC) is set and a malfunction indicator lamp (MIL) is illuminated. As shown in Figure 1, the ECU 16 may be configured to set a corresponding diagnostic trouble code (DTC) 24 and/or generate an operator alert, such an illumination of a MIL 26. Although not shown, in one embodiment, the ECU 16 may be configured so as to allow interrogation (*e.g*., by a skilled technician) for retrieval of such set DTCs. Generally, the process of storing diagnostic trouble codes and subsequent interrogation and retrieval is well known to one skilled in the art and will not be described in any further detailed.

With continued reference to Figure 1, the exhaust gas treatment system 14 may include a diesel oxidation catalyst (DOC) 28, a diesel particulate filter (DPF) 30, a dosing subsystem 32 including at least (i) a reductant (*e.g*., urea-water solution) storage tank 34 and (ii) a dosing unit 36, and a selective catalytic reduction (SCR) catalyst 38. In addition, Figure 1 shows various sensors disposed in and/or used by the treatment system 14. These include a DOC inlet temperature sensor 39 configured to generate a DOC inlet temperature signal 41 (T_{DOC-IN}), a NOx sensor 40 configured to generate a NOx signal 42 (NOx) indicative of a sensed NOx concentration, a first exhaust gas temperature sensor 44, located at the inlet of the SCR catalyst 38, configured to generate a first temperature signal 46 (T_{IN}), an optional second exhaust gas temperature sensor 48 configured to generate a second temperature signal 50 (T_{OUT}), a first pressure sensor 52 configured to generate a first pressure signal 54 (PIN), a second pressure sensor 56 configured to generate a second pressure signal 58 (P_{OUT}), and an ammonia (NH₃) concentration sensor 60 configured to generate an ammonia concentration signal 62 indicative of the sensed NH₃ concentration. In many commercial vehicles, a NOx sensor 64 is provided for generating a second NOx signal 66 indicative of the NOx concentration exiting the tail pipe. However, such is shown for completeness only.

The DOC 28 and the DPF 30 may comprise conventional components to perform their known functions.

The dosing subsystem 32 is responsive to an NH₃ Request signal produced by a dosing control 80 and configured to deliver a NOx reducing agent at an injection node 68, which is introduced in the exhaust gas stream in accurate, controlled doses 70 (*e.g*., mass per unit time). The reducing agent ("reductant") may be, in general, (1) NH₃ gas or (2) a urea-water solution containing a predetermined known concentration of urea. The dosing unit 32 is shown in block form for clarity and may comprise a number of sub-parts, including but not limited to a fluid delivery mechanism, which may include an integral pump or other source of pressurized transport of the urea-water solution from the storage tank, a fluid regulation mechanism, such as an electronically controlled injector, nozzle or the like (at node 68), and a programmed dosing control unit. The dosing subsystem 32 may take various forms known in the art and may comprise commercially available components.

The SCR catalyst 38 is configured to provide a mechanism to promote a selective reduction reaction between NOx, on the one hand, and a reductant such as ammonia gas NH₃ (or aqueous urea, which decomposes into ammonia, NH₃) on the other hand. The result of such a selective reduction is, as described above in the Background, N₂ and H₂O. In general, the chemistry involved is well documented in the literature, well understood to those of ordinary skill in the art, and thus will not be elaborated upon in any greater detail. In one embodiment, the SCR catalyst 38 may comprise copper zeolite (Cu-zeolite) material, although other materials are known. See, for example, U.S. Patent No. 6,576,587 entitled "HIGH SURFACE AREA LEAN NOx CATALYST" issued to Labarge et al., and U.S. Patent No. 7,240,484 entitled "EXHAUST TREATMENT SYSTEMS AND METHODS FOR USING THE SAME" issued to Li. et al., both owned by the common assignee of the present invention, In addition, as shown, the SCR catalyst 38 may be of multi-brick construction, including a plurality of individual bricks 38₁, 38₂ wherein each "brick" may be substantially disc-shaped. The "bricks" may be housed in a suitable enclosure, as known.

The NOx concentration sensor 40 is located upstream of the injection node 68. The NOx sensor 40 is so located so as to avoid possible interference in the NOx sensing function due to the presence of NH₃ gas. The NOx sensor 40, however, may alternatively be located further upstream, between the DOC 28 and the DPF 30, or upstream of the DOC 28. In addition, the exhaust temperature is often referred to herein, and for such purpose, the temperature reading from the SCR inlet temperature sensor 44 (T_{IN}) may be used.

The NH₃ sensor 60 may be located, in certain embodiments, at a mid-brick position, as shown in solid line (*i.e*., located anywhere downstream of the inlet of the SCR catalyst 38 and upstream of the outlet of the SCR catalyst 38). As illustrated, the NH₃ sensor 60 may be located at approximately the center position. The mid-brick positioning is significant. The sensed ammonia concentration level in this arrangement, even during nominal operation, is at a small yet detectable level of mid-brick NH₃ slip, where the downstream NOx conversion with this detectable NH₃ can be assumed in the presence of the rear brick, even further reducing NH₃ concentration levels at the tail pipe to within acceptable levels. Alternatively, in certain embodiments, the NH₃ sensor 60 may be located at the outlet of the SCR catalyst 38. The remainder of the sensors shown in Figure 1 may comprise conventional components and be configured to perform in a conventional manner known to those of ordinary skill in the art.

The dosing control 80 is configured to generate the NH₃ Request signal that is sent to the dosing unit 36, which represents the command for a specified amount (*e.g*., mass rate) of reductant to be delivered to the exhaust gas stream. The dosing control 80 includes a plurality of inputs and outputs, designated 18, for interface with various sensors, other control units, etc., as described herein. Although the dosing control 80 is shown as a separate block, it should be understood that depending on the particular arrangement, the functionality of the dosing control 80 may be implemented in a separate controller, incorporated into the ECU 16, or incorporated, in whole or in part, in other control units already existing in the system (*e.g*., the dosing unit). Further, the dosing control 80 may be configured to perform not only control functions described herein but perform the various diagnostics also described herein as well. For such purpose, the dosing control 80 may include conventional processing apparatus known in the art, capable of executing pre-programmed instructions stored in an associated memory, all performing in accordance with the functionality described herein. That is, it is contemplated that the control and diagnostic processes described herein will be programmed in a preferred embodiment, with the resulting software code being stored in the associated memory. Implementation of the invention, in software, in view of the foregoing enabling description, would require no more than routine application of programming skills by one of ordinary skill in the art. Such a control may further be of the type having both ROM, RAM, a combination of non-volatile and volatile (modifiable) memory so that the software can be stored and yet allow storage and processing of dynamically produced data and/or signals.

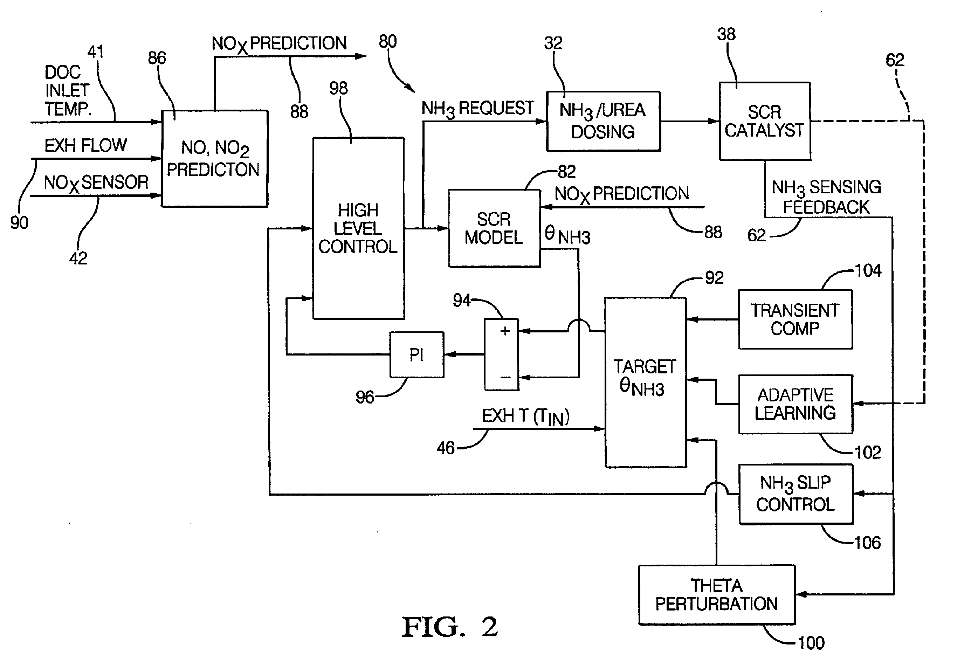

Figure 2 is a block diagram showing an overview of the dosing control 80 of Figure 1. The basic strategy is to control the dosing rate (*e.g*., urea-water solution) so as to ensure that the there is adequate ammonia stored in the SCR catalyst 38 to achieve (i) a high NOx conversion rate (*i.e*., conversion of NOx into N₂ and H₂O), with (ii) a low occurrence or no occurrence at all of ammonia (NH₃) slips exceeding predetermined maximum thresholds.

Overall, the dosing control 80 is configured to generate an NH₃ Request, which is communicated to the dosing unit 36 (*i.e*., shown as the "NH₃/Urea Dosing"). In the illustrative embodiment, the NH₃ Request is indicative of the mass flow rate at which the dosing subsystem 32 is to introduce the urea-water solution into the exhaust gas stream. The control variable used in implementing the dosing control strategy is a so-called ammonia surface coverage parameter theta (θ_{NH3}), which corresponds to the NH₃ surface storage fraction associated with the SCR catalyst 38. In other words, the ammonia surface coverage parameter theta (θ_{NH3}) indicates the amount of ammonia-NH₃ stored in the SCR catalyst 38. One aspect of the operation of the dosing control 80 involves an SCR model 82.

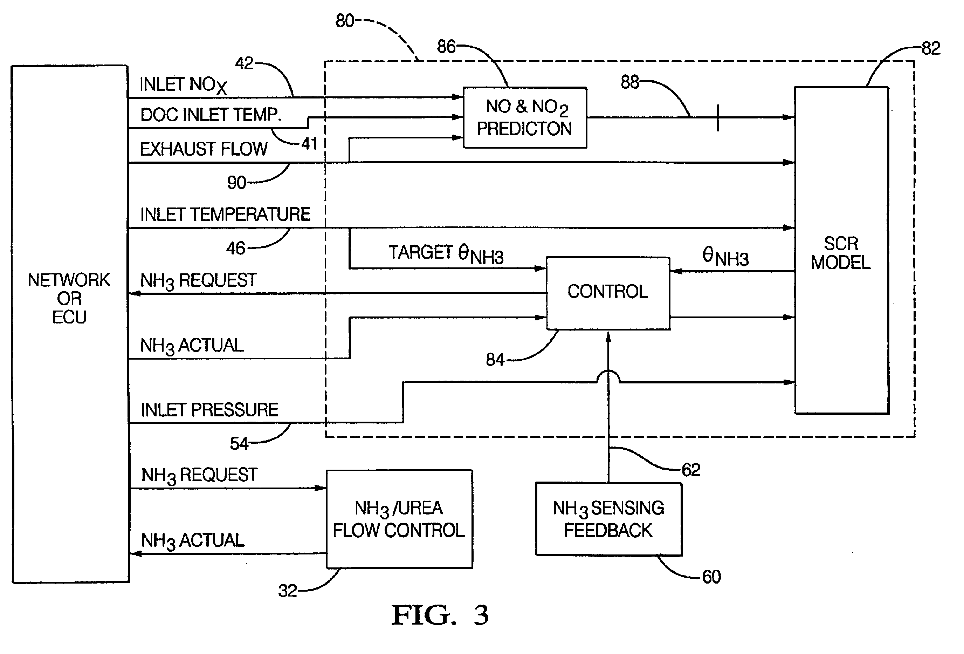

Figure 3 is a signal flow mechanization schematic showing inputs and outputs of the SCR model 82. The SCR model 82 is a chemistry-based SCR model and is shown with a theta control block 84, and a "NO and NO₂" predictor block 86. The SCR model 82 is configured to model the physical SCR catalyst 38 and compute real time values for the ammonia surface coverage parameter theta (θ_{NH3}). The theta control block 84 is configured to compare the computed theta (θ_{NH3}) against a target value for theta ("Target θ_{NH3}"), which results in a theta error. The theta control block 84 is configured to use a control strategy (*e.g*., a proportional-integral (PI) control algorithm) to adjust the requested NH₃ dosing rate ("NH₃ Request") to reduce the theta error. The theta control block 84 also employs closed-loop feedback, being responsive to ammonia sensing feedback by way of the ammonia sensor 60. The theta control block 84 may use NH₃ feedback generally to adapt target theta values to account for catalyst degradation, urea injection malfunction or dosing fluid concentration variation that may be encountered during real-world use. As will be described, the NH₃ sensing feedback is also used for various control and diagnostic improvements. The predictor block 86 receives the DOC inlet temperature signal 41 (T_{DOC-IN}), the NOx sensor signal 42 and the exhaust flow signal 90 as inputs and is configured to produce data 88 indicative of the respective NO and NO₂ concentration levels (engine out) produced by the engine 10. The predictor block 86 may comprise a look-up table (LUT) containing NO and NO₂ data experimentally measured from the engine 10.

The SCR model 82 may be configured to have access to a plurality of signals/parameters as needed to execute the predetermined calculations needed to model the catalyst 38. In the illustrative embodiment, this access to sensor outputs and other data sources may be implemented over a vehicle network (not shown), but which may be a controller area network (CAN) for certain vehicle embodiments. Alternatively, access to certain information may be direct to the extent that the dosing control 80 is integrated with the engine control function in the ECU 16. It should be understood that other variations are possible.

The SCR model 82 may comprise conventional models known in the art for modeling an SCR catalyst. In one embodiment, the SCR model 82 is responsive to a number of inputs, including: (i) predicted NO and NO₂ levels 88; (ii) an inlet NOx amount, which may be derived from the NOx indicative signal 42 (best shown in Figure 1); (iii) an exhaust mass air flow (MAF) amount 90, which may be either a measured value or a value computed by the ECU 16 and shown as exhaust MAF parameter 20 in Figure 1; (iv) an SCR inlet temperature, which may be derived from the first temperature signal 46 (T_{IN}); (v) an SCR inlet pressure, which may be derived from the first pressure signal 54 (P_{IN}); and (vi) the actual amount of reductant (*e.g*., NH₃, urea-water solution shown as "NH₃ Actual" in Figure 2) introduced by the dosing subsystem 32. The actual NH₃ amount helps ensure that the model provides accurate tracking of the reductant dosing. In one embodiment, values for theta (θ_{NH3}) are updated at a frequency of 10 Hz, although it should be understood this rate is exemplary only. There are a plurality of modeling approaches known in the art for developing values for a surface coverage parameter theta (θ_{NH3}), for example as seen by reference to the article by M. Shost et. al, "Monitoring, Feedback and Control of Urea SCR Dosing Systems for NOx Reduction: Utilizing an Embedded Model and Ammonia Sensing", SAE Technical Paper Series 2008-01-1325.

Referring again to Figure 2, the dosing control 80 includes additional blocks. In particular, a target theta parameter (Target θ_{NH3}) block 92 is shown, which is configured to provide a value for the target theta parameter (Target θ_{NH3}) preferably as function of temperature (*e.g*., exhaust gas temperature, such as the SCR inlet temperature T_{IN}). The target θ_{NH3}, which is determined as a function of the SCR catalyst inlet temperature T_{IN}, is conventionally set-up based on the following considerations: (1) desire to achieve a maximum possible NOx conversion efficiency with acceptable NH₃ slip levels (30 ppm peak, 10 ppm average) for a given emission test cycle, and (2) recognition that limits must be set for the theta values at low temperatures to prevent potential high NH₃ slips upon sudden temperature ramp up in off-cycle tests. In other words, in a pure ammonia storage control mode (*i.e*., theta parameter control), different emission cycles may call for different theta values in order to achieve the best NOx conversion within the confines of the applicable NH₃ slip limits.

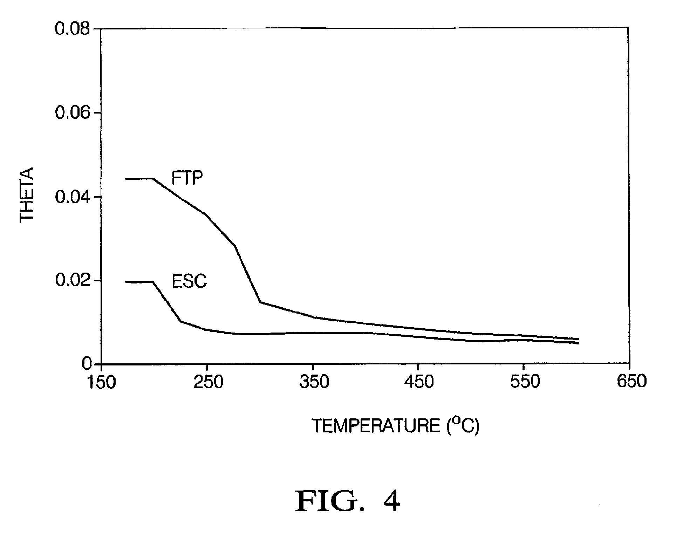

Figure 4 is a diagram showing exemplary target theta θ_{NH3} curves determined for both the Euro Stationary Cycle (ESC) and the Federal Test Procedure (FTP) emission cycles using Cu-zeolite catalysts. As a practical matter, however, only one curve can be used in real world situations. The values from one of the target theta curves may be stored in a look-up table (LUT) or the like for run-time use by the theta control block 84 of the dosing control 80. Such values may take the form of (temperature, theta value) data pairs.

As shown in Figure 2, the theta control 84 further includes a comparator 94 *(e.g.,* a summer, or equivalent) configured to generate the theta error signal described above, indicative of the difference between the target theta (Target θ_{NH3}) and the computed theta (θ_{NH3}) from the SCR model. A PI control 96 is configured to produce an output signal configured to reduce the magnitude of the theta error. A high level control block 98 is responsive to various inputs to produce the NH₃ Request signal, which is communicated to the dosing subsystem 32.

Figure 2 also shows, in block form, a number of additional control and diagnostic features. These additional control and diagnostic features may be arranged to work together in some embodiments to achieve maximum NOx conversion while maintaining acceptable NH₃ slip levels under various driving conditions (*i.e*., in vehicle applications). The dosing control 80 thus includes a number of functional blocks to implement these features: a theta perturbation diagnostic block 100, an adaptive learning diagnostic block 102, a transient compensation control block 104 and an NH₃ slip control block 106.

The theta perturbation diagnostic block 100 is configured to perturb the target theta parameter in accordance with a small diagnostic function and to measure the resulting response to determine the state of health of one or more components of the exhaust treatment system 14. The adaptive learning diagnostic block 102 includes a diagnostic feature that monitors how much adaptation has been applied in adjusting the target theta parameter and generates an error when the level of adaptation exceeds predetermined upper and lower limits. The logic in operation is that at some level, the ability to adapt target theta values to overcome errors (*e.g*., reagent misdosing, reagent quality problems, SCR catalyst degradation) will reach its control limit for maintaining emissions. When this control limit is exceeded, the diagnostic generates an error. These features are described in greater detail in the co-pending patent application entitled "DIAGNOSTIC METHODS FOR SELECTIVE CATALYTIC REDUCTION (SCR) EXHAUST TREATMENT SYSTEM", (Attorney Docket No. DP-318283), filed on even date herewith, owned by the common assignee of the present invention.

As described above, it has been determined that in pure ammonia storage control mode, different emission cycles (*e.g*., ESC, FTP) may call for conversion within NH₃ slip constraints. Therefore, due to the transient nature of such emission test cycles, the target theta curve (target θ_{NH3}) has to be set conservatively low in order to prevent NH₃ slips. Ammonia slip is especially problematic when the temperature of the catalyst is increasing. The invention provides a robust control approach with an improvement that overcomes the above-described theta control limitations, and helps mitigate a potential high NH₃ slip in the event of an increase in the exhaust gas temperature.

The improvement involves shutting-off dosing altogether when certain exhaust conditions are recognized by the dosing control ("NH₃ slip control").

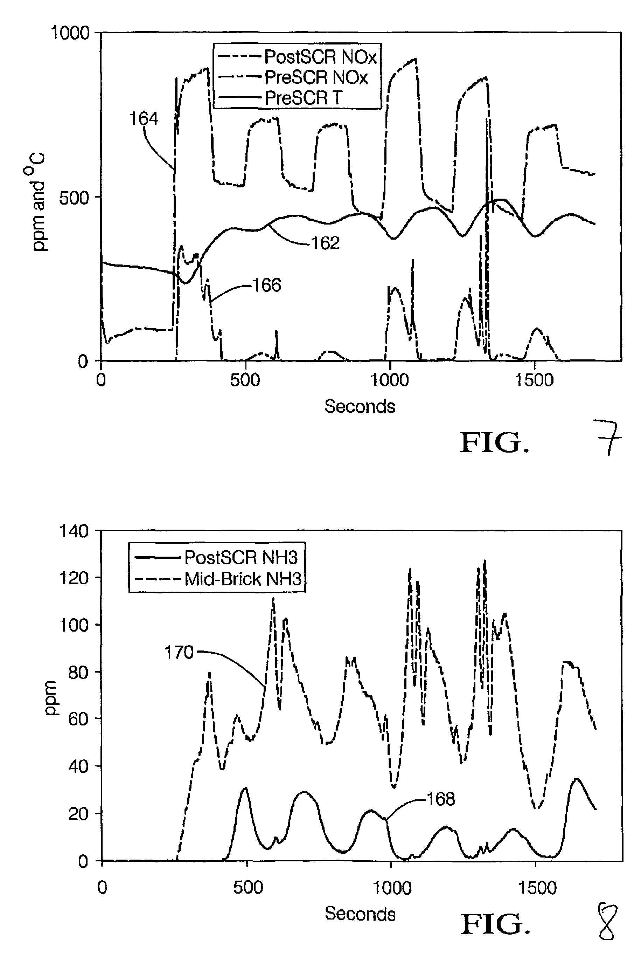

*NH₃ Slip Control on Recognition of Certain Exhaust Conditions.* This aspect of the invention addresses the NH₃ slip risk during SCR catalyst operation while maximizing NOx conversion efficiency by using a mid-brick positioned ammonia sensor to provide feedback for detecting the slip risk. As described above, the ammonia sensor being located at a mid-brick position of the SCR catalyst provides greater sensitivity to NH₃ dosing variation because of reduced NH₃ storage capacity of the front (*i.e*., forward or upstream) brick (*e.g*., see Figure 8 below). Therefore, the more rapid response to dosing errors, by virtue of the mid-brick detection, can be utilized to control ammonia slip with the help of the back (*i.e*., rear or downstream) brick. This feature of the invention utilizes this quick response in combination with the recognition of certain exhaust conditions to activate a slip trip mode, which calls for, in one embodiment, complete dosing shut-off. This feature provides even greater flexibility in ammonia slip control while maximizing NOx removal.

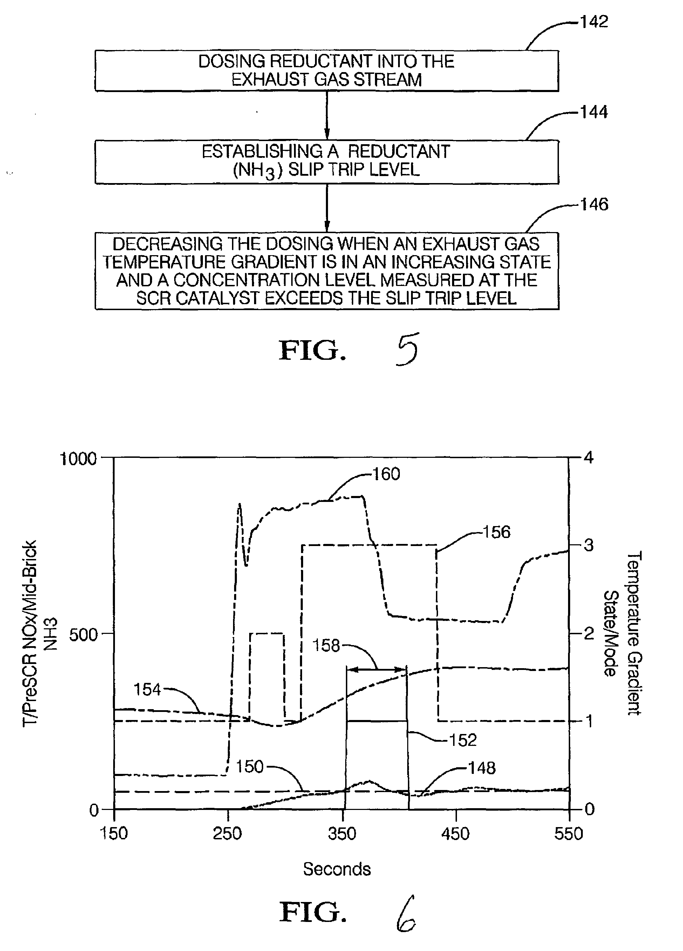

Figure 5 is a flowchart of a method of NH₃ slip control while Figure 6 is a timing diagram showing the first 550 seconds of an exemplary ESC driving cycle, illustrating the relevant signals. In particular, Figure 6 shows the temperature at the SCR inlet increase from less than 250°C to 400°C between about time t_{290_}seconds and time t_{450_seconds}, while the engine out NOx (trace 160) starts to decrease after time t_{370_}seconds. Since the engine out NOx drops significantly, the ammonia stored on the SCR catalyst at low temperatures would otherwise slip without the slip trip intervention of this feature of the invention. The method for begins in step 142.

In step 142, the method involves dosing NH₃ (*i.e*., a reductant, generally, such as urea-water solution of Figure 1) into the exhaust stream in an amount based on target theta (target θ_{NH3}). The target theta parameter has been described in detail above. Generally speaking, this feature may remain inactive until a predetermined, minimum temperature has been reached, which may range between about 250 to 300 °C may further be between about 275 to 300 °C and may be about 300 °C. It should be understood that the compromises of a fixed target theta curve may manifest themselves more acutely as the catalyst temperature increases rapidly, particularly the low end of the overall target theta table where ammonia storage is high but where there is more risk of NH₃ slip. Therefore, it should be understood that while the NH₃ slip control feature will be most useful in those certain temperature ranges, the invention is not so limited. In addition, it bears emphasizing that the ammonia concentration sensor 60 is preferably located for this method at a mid-brick position. The sensor 60 produces an ammonia concentration signal 62 that is indicative of the ammonia concentration level. Figure 6 shows the ammonia concentration level as trace 148. The method proceeds to step 144.

In step 144, an NH₃ slip trip level is established (*e.g*., 50 ppm). In one embodiment, the slip trip level may be adjustable and selected based on the exhaust temperature (*i.e*., the SCR inlet temperature (T_{IN})). Figure 6 shows an exemplary slip trip level as trace 150. The method proceeds to step 146.

In step 146, the method is configured to decrease, or, in a preferred embodiment, entirely shut off dosing when certain exhaust conditions for activating the slip trip mode have been satisfied. The first condition to be satisfied is when the exhaust gas temperature gradient is in an "increasing" state. The method for making this determination has been described above. Note, Figure 6 shows the exhaust temperature as trace 154 and the corresponding state of the exhaust temperature gradient as trace 156. Trace (state variable) 156 may take values of either "1" (steady-state), "2" (decreasing) or "3" (increasing). The second condition to be satisfied is when the NH₃ concentration level (trace 148) exceeds the NH₃ slip trip level 150. Figure 6 shows the NH₃ concentration level (trace 148) exceeding the slip trip level (trace 150) during the time interval 158. Accordingly, since the first condition and the second condition are both satisfied during time interval 158, the slip trip mode is activated, which is represented by trace 152 (logic "1"). Note, the slip trip mode 152 can assume a logic value of "0" (inactive) or "1" (active).

When the slip trip mode is active, as per method step 146, the dosing control is configured to preferably shut-off NH₃ dosing. As shown in Figure 3, the output of the NH₃ slip control block 106, namely the state variable (trace 152) indicating whether the slip trip mode is active or inactive, is provided directly to the high-level control 98. The dosing shut-off imposed by high-level control 98 continues for as long as the requisite conditions remain satisfied. This feature prevents potentially high slips of ammonia, especially when the target ammonia storage (coverage) parameter theta (target θ_{NH3}) is set to relatively high values especially for low temperatures. The significant benefit is that it allows for high ammonia storage (*i.e*., high target θ_{NH3}) at low temperatures (*e.g*., below 300 °C) for maximal NOx conversion under certain driving conditions while at the same time having significantly less risk of unacceptably high NH₃ slips when the exhaust temperature increases.

Figures 7 and 8 show the data for an entire ESC driving cycle, where NOx conversion is about 90.6%, the peak NH₃ slip was about 35 ppm and the average NH₃ slip was about 9 ppm.

Figure 7 shows the pre-SCR catalyst inlet temperature (TIN) as trace 162, a pre-SCR catalyst NOx concentration level as trace 164 and a post-SCR catalyst NOx concentration level as trace 166, all for the ESC driving cycle. Note that the NOx conversion (*i.e*., removal), as represented by the difference between traces 164 and 166, was about 90.6%.

Figure 8 shows the post-SCR catalyst NH₃ concentration level as trace 168 and the mid-brick NH₃ concentration level as trace 170, all for the ESC driving cycle. Note that the peak NH₃ slip was about 34 ppm while the average NH₃ slip was about 9 ppm.

While particular embodiments of the invention have been shown and described, numerous variations and alternate embodiments will occur to those skilled in the art. Accordingly, it is intended that the invention be limited only in terms of the appended claims.

## Claims

1. A method of reductant slip control for an internal combustion engine producing an exhaust gas stream (12) to an exhaust treatment system (14) having a selective catalytic reduction (SCR) catalyst (38), the method comprising the steps of:
dosing (142) reductant into the exhaust gas stream;
establishing (144) a reductant slip trip level based on an exhaust gas temperature;
decreasing (146) the reductant dosing when an exhaust gas temperature gradient is in an increasing state and a reductant concentration level measured at the SCR catalyst (38) exceeds the reductant slip trip level.

2. The method of claim 1 where said decreasing step (146) includes the sub-step of discontinuing reductant dosing

3. The method of claim 1 or 2 wherein said reductant is selected from the group comprising ammonia (NH₃) and urea, said reductant concentration level being an ammonia concentration level, said dosing step (142) including the sub-step of mixing the reductant with the exhaust gas upstream of the SCR catalyst (38).

4. The method of claim 3 wherein the SCR catalyst (38) is multi-brick (38₁, 38₂) in construction, said method further comprising the step of:
disposing an ammonia gas concentration sensor at a mid-brick position of the SCR catalyst (38).

5. The method of claim 4 wherein the mid-brick position is located at the substantial center of the SCR catalyst (38).

6. The method of claim 2 wherein said step of discontinuing is further performed when an exhaust gas temperature exceeds a predetermined threshold.

## Patentansprüche

1. Verfahren einer Reduktionsmittelaustrittssteuerung für einen Verbrennungsmotor, der einen Abgasstrom (12) zu einem Abgasbehandlungssystem (14) erzeugt, mit einem "selektive katalytische Reduktion (SCR - selective catalytic reduction)"-Katalysator (38), wobei das Verfahren die Schritte aufweist:
Dosieren (142) von Reduktionsmittel in den Abgasstrom;
Aufstellen (144) eines Reduktionsmittelaustritt-Auslösepegels basierend auf der Abgastemperatur;
Verringern (146) der Dosierung des Reduktionsmittels, wenn ein Abgastemperatur-Gradient in einem zunehmenden Zustand ist und ein Reduktionsmittelkonzentrationspegel, der an dem SCR-Katalysator (38) gemessen wird, den Reduktionsmittelaustritt-Auslösepegel übersteigt.

2. Verfahren gemäß Anspruch 1, wobei der Schritt des Verringerns (146) den Teilschritt eines Beendens der Dosierung des Reduktionsmittels umfasst.

3. Verfahren gemäß Anspruch 1 oder 2, wobei das Reduktionsmittel aus der Gruppe ausgewählt wird, die Ammoniak (NH₃) und Harnstoff aufweist, wobei der Reduktionsmittelkonzentrationspegel ein Ammoniakkonzentrationspegel ist, wobei der Dosierungsschritt (142) den Teilschritt eines Mischens des Reduktionsmittels mit dem Abgas stromaufwärts von dem SCR-Katalysator (38) umfasst.

4. Verfahren gemäß Anspruch 3, wobei der SCR-Katalysator (38) eine Mehrfach-Baustein(38₁, 38₂)-Konstruktion ist, wobei das Verfahren weiter den Schritt aufweist:
Anordnen eines Ammoniakgaskonzentrationssensors an einer Mittel-Baustein-Position des SCR-Katalysators (38).

5. Verfahren gemäß Anspruch 4, wobei sich die Mittel-Baustein-Position an dem wesentlichen Zentrum des SCR-Katalysators (38) befindet.

6. Verfahren gemäß Anspruch 2, wobei der Schritt des Beendens weiter durchgeführt wird, wenn eine Abgastemperatur eine vorgegebene Schwelle übersteigt.

## Revendications

1. Procédé de régulation de dérive de réducteur pour un moteur à combustion interne produisant un flux de gaz d'échappement (12) vers un système de traitement d'échappement (14) ayant un catalyseur (38) de réduction catalytique sélective (SCR), le procédé comprenant les étapes consistant à :
doser (142) le réducteur dans le flux de gaz d'échappement ;
établir (144) un niveau de dérive de réducteur en se basant sur une température des gaz d'échappement ;
diminuer (146) le dosage du réducteur quand un gradient de température de gaz d'échappement est dans une situation croissante et qu'un niveau de concentration de réducteur mesuré au niveau du catalyseur SCR (38) excède le niveau de dérive du réducteur.

2. Procédé selon la revendication 1, dans lequel ladite étape de diminution (146) inclut la sous-étape d'arrêter le dosage du réducteur.

3. Procédé selon la revendication 1 ou 2, dans lequel ledit réducteur est choisi parmi le groupe comprenant de l'ammoniac (NH₃) et de l'urée, ledit niveau de concentration de réducteur étant un niveau de concentration d'ammoniac, ladite étape de dosage (142) incluant la sous-étape consistant à mélanger le réducteur avec les gaz d'échappement en amont du catalyseur SCR (38).

4. Procédé selon la revendication 3, dans lequel le catalyseur SCR (38) a une structure en multi-briques (38₁, 38₂), ledit procédé comprenant en outre l'étape consistant à :
disposer un capteur de concentration de gaz ammoniac en une position inter-briques du catalyseur SCR (38).

5. Procédé selon la revendication 4, dans lequel la position inter-briques est située sensiblement au centre du catalyseur SCR (38).

6. Procédé selon la revendication 2, dans lequel ladite étape d'arrêt est en outre exécutée quand une température des gaz d'échappement excède un seuil prédéterminé.
